(19) Europäisches Patentamt
European Patent Office
Office européen des brevets

(11) Veröffentlichungsnummer: **0 034 805**
**B1**

(12) # EUROPÄISCHE PATENTSCHRIFT

(45) Veröffentlichungstag der Patentschrift: **11.04.84**

(51) Int. Cl.³: **C 07 D401/04**, C 08 K 5/34

(21) Anmeldenummer: **81101172.5**

(22) Anmeldetag: **19.02.81**

(54) **Cyclische Imide, deren Herstellung und Verwendung.**

(30) Priorität: **20.02.80 DE 3006272**

(43) Veröffentlichungstag der Anmeldung: **02.09.81 Patentblatt 81/35**

(45) Bekanntmachung des Hinweises auf die Patenterteilung: **11.04.84 Patentblatt 84/15**

(84) Benannte Vertragsstaaten:
**BE CH DE FR GB IT LI LU NL SE**

(56) Entgegenhaltungen:
**EP-A- 0 006 213**
**DE-A- 2 040 975**
**DE-A- 2 930 397**
**Die Akte enthält technische Angaben, die nach dem Eingang der Anmeldung eingereicht wurden und die nicht in dieser Patentschrift enthalten sind.**

(73) Patentinhaber: **CHEMISCHE WERKE HÜLS AG**
**Postfach 1320**
**D-4370 Marl 1 (DE)**

(72) Erfinder: **Kelkenberg, Heike, Dr.**
**Horster Strasse 525**
**D-4250 Bottrop (DE)**
Erfinder: **Wolf, Elmar, Dr.**
**Stauffenbergstrasse 7**
**D-4350 Recklinghausen (DE)**

(74) Vertreter: **Stell, Hanna, Dipl.-Chem.**
**RSP PATENTE - PB 15 Postfach 1320**
**D-4370 Marl 1 (DE)**

EP 0 034 805 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Cyclische Imide, deren Herstellung und Verwendung

Die vorliegende Erfindung betrifft neue cyclische Imide und ihre Verwendung als Stabilisator für Kunststoffe — insbesondere für Polyolefine — gegen Photo- und/oder Thermozersetzung.

Zur Stabilisierung von Polymeren hat sich in jüngerer Zeit eine Reihe von Derivaten des 2,2,6,6-Tetramethylpiperidins als besonders geeignet erwiesen. So werden z. B. Ester des entsprechenden 4-Hydroxy-tetramethylpiperidins mit Erfolg eingesetzt. Aber auch diverse Derivate des 4-Amino-2,2,6,6,-tetramethyl-piperidins werden vorgeschlagen.

Die DE-A 20 40 975 betrifft z. B. eine synthetische Komposition, die gegen Photozersetzung und thermische Zersetzung stabilisiert ist und für diesen Zweck verschiedene 4-Amino-2,2,6,6-tetramethylpiperidinderivate enthält. U. a. wird auch ein Phthalsäureimid erwähnt, aber keine Daten über seine Wirksamkeit angegeben.

Desweiteren zeigt die DE-A 29 30 397 substituierte Bis(2,2,6,6-tetramethyl-4-piperidyl)-Verbindungen mit cyclischen Harnstoffverknüpfungen als Lichtstabilisatoren für Polymere.

Die EP-A 6213 bezieht sich auf das Stabilisieren von sauerkatalysierten Einbrennlacken unter Anwendung von N-substituierten 2,2,6,6-Tetraalkylpiperidin-Verbindungen. Falls cyclische Imide eingesetzt werden sollen, so ist der Ring-N stets substituiert.

Es war Aufgabe der Erfindung, neue Verbindungen auf Basis 4-Amino-2,2,6,6-tetramethylpiperidin zu finden, die eine besondere Eignung als Stabilisatoren für Kunststoffe, insbesondere Polyolefine, gegen Photo- und Thermozersetzung zeigen.

Gegenstand der Erfindung sind cyclische Imide der allgemeinen Formel

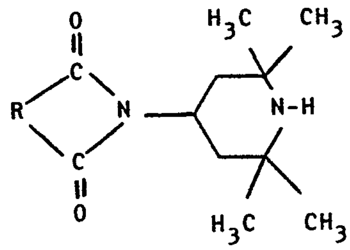

(I)

in der R ein gesättigter oder ungesättigter, gegebenenfalls Alkyl — oder Alkenylsubstituierter Alkylen — oder Cycloalkylenrest mit 2-120 C-Atomen ist, mit der Maßgabe, daß von dieser Definition keine aromatischen Reste erfaßt werden.

Diese Verbindungsklasse hat den Vorteil, daß sie besonders thermostabil ist und gut verträglich ist mit Polyolefinen. Zudem läßt sie sich über eine einfache, nachfolgend beschriebene Synthese herstellen.

Die Herstellung der cyclischen Imide der allgemeinen Formel I kann nach an sich bekannten Methoden erfolgen dadurch, daß man cyclische Anhydride bzw. deren Säureform mit 4-Amino-2,2,6,6-tetramethyl-piperidin umsetzt. Dabei kann mit oder ohne Lösungsmittel gearbeitet werden. Reaktionswasser wird destillativ abgetrennt. Der Austausch von Wasserstoff als R' in Formel I gegen andere Substituenten erfolgt anschließend nach bekannten Methoden.

Der Vorteil gegenüber den bekannten Methoden ist, daß hier nur eine Amino-Gruppe des Diamins mit den Anhydriden reagiert und sich somit keine Bisimide ausbilden können. Bei den bekannten Methoden zur Herstellung von entsprechenden Imidamiden aus z. B. Hexamethylendiamin oder Phenylendiamin setzt man zur Vermeidung der Bildung von Bisimiden das Diamin im großen Überschuß ein.

Weiter betrifft die Erfindung die Herstellung von cyclischen cyclischen Imiden der allgemeinen Formel :

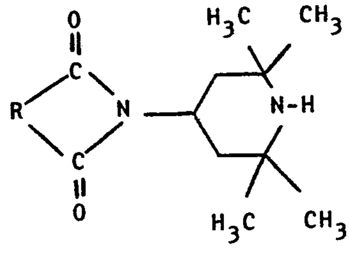

dadurch gekennzeichnet, daß man 4-Amino-2,2,6,6-tetramethylpiperidin mit cyclischen Anhydriden bzw. deren Säureform der allgemeinen Formel :

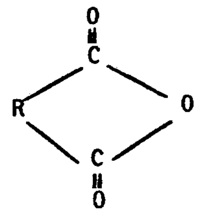

in der R die obenstehende Bedeutung besitzt, bei Temperaturen von 110-250 °C, insbesondere 200 °C, umsetzt.

Bei den einzusetzenden cyclischen Anhydriden handelt es sich z. B. um Bernsteinsäureanhydrid, um bekannte Alkyl- bzw. Alkenyl-Bernsteinsäureanhydride sowie um bekannte Diels-Alder-Produkte aus Maleinsäureanhydrid und Dienen, wie z. B. Butadien, Isopren, Piperylen, Cyclopentadien, Trimethylcyclohexadien u. a., sowie um die entsprechenden hydrierten Diels-Alder-Produkte.

Die erfindungsgemäßen Verbindungen der Formel I können besonders vorteilhaft als Stabilisator für Kunststoffe, insbesondere Polyolefine, gegen deren Schädigung durch Einwirkung von Sauerstoff, Wärme und Licht verwendet werden.

Ein weiterer Gegenstand der Erfindung ist daher die Verwendung der erfindungsgemäßen cyclischen Imide für die Stabilisierung von Kunststoffen, insbesondere Polyolefinen.

Die Stabilisatoren werden den Kunststoffen in einer Konzentration von 0,01 bis 5 Gew.-%, bevorzugt 0,2-0,4 Gew.-%, bezogen auf die Menge Kunststoff, zugesetzt.

Die Einarbeitung kann nach der Polymerisation erfolgen, beispielsweise durch Einmischen der cyclischen Imide und gegebenenfalls weiterer Additive in die Schmelze nach den in der Technik üblichen Methoden.

Die Herstellung und Verwendung der erfindungsgemäßen Verbindungen wird in den folgenden Beispielen näher beschrieben.

## Herstellung

### Beispiel 1

N-(2,2,6,6-Tetramethyl-4-piperidyl)-n-dodecylsuccinimid

405 g (2,4 Mol) Dodecen-(1) und 196 g (2,0 Mol) Maleinsäureanhydrid werden in 800 ml Toluol bei 230 °C im 2 l-Stahlautoklaven in 8 h umgesetzt. Der Überschuß an α-Olefin und nicht umgesetztem Maleinsäureanhydrid werden im Vakuum abdestilliert. Anschließend wird wieder in Toluol in Gegenwart von Palladium bei 80 °C hydriert. Die vom Katalysator befreite hydrierte Lösung setzt man roh mit 312 g (2,0 Mol) Triacetondiamin (4-Amino-2,2,6,6-tetramethyl-piperidin) bei 200 °C in 3 h unter Druck um. Das Reaktionswasser und das Toluol werden abdestilliert.

Die Aufarbeitung des rohen N-(2,2,6,6-Tetramethyl-4-piperidyl) n-dodecylsuccinimids erfolgt destillativ im Hochvakuum.

Siedepunkt : 195 °C bei $10^{-4}$ bar
$n_D^{25}$ : 1,481 5
Basenzahl : 137 mg KOH/g

Elementaranalyse

| | | | | |
|---|---|---|---|---|
| berechnet : | C 73,9 % | H 11,3 % | N 6,9 % | O 7,9 % |
| gefunden : | C 73,7 % | H 11,0 % | N 7,1 % | O 7,8 % |

### Beispiel 2

N-(2,2,6,6-Tetramethyl-4-piperidyl)-n-hexadecylsuccinimid

Analog Beispiel 1 werden 537 g (2,4 Mol) Hexadecen-(1) anstelle von Dodecen-(1) in Xylol anstelle von Toluol umgesetzt.

Siedepunkt : 220 °C bei $10^{-4}$ bar
Schmelzpunkt : 39 °C
Basenzahl : 118 mg KOH/g

Elementaranalyse

| | | | | |
|---|---|---|---|---|
| berechnet : | C 75,3 % | H 11,7 % | N 6,1 % | O 6,9 % |
| gefunden : | C 75,4 % | H 11,5 % | N 6,3 % | O 7,0 % |

Beispiel 3

N-(2,2,6,6-Tetramethyl-4-piperidyl)-n-octadecylsuccinimid

Analog Beispiel 1 werden anstelle von Dodecen-(1) 606 g (2,4 Mol) Octadecen-(1) in Xylol anstelle von Toluol umgesetzt.

Siedepunkt : 263 °C bei $10^{-4}$ bar
Schmelzpunkt : 44 °C
Basenzahl : 111 mg KOH/g

Elementaranalyse

| | | | | |
|---|---|---|---|---|
| berechnet : | C 75,9 % | H 11,8 % | N 5,7 % | O 6,5 % |
| gefunden : | C 75,8 % | H 11,6 % | N 6,1 % | O 6,6 % |

Beispiel 4

N-(2,2,6,6-Tetramethyl-4-piperidyl)-polybutadienylsuccinimid

300 g technisches Addukt aus Polyöl 110 (1,4-cis-Polybutadien-Öl, MG : ca. 1500, Handelsprodukt der Firma Chemische Werke Hüls AG) und 10 Gew.-% Maleinsäureanhydrid werden mit 47,8 g Triacetondiamin in 1 l Toluol bei 200 °C im Stahlautoklaven in 2 h umgesetzt. Reaktionswasser und Toluol werden anschließend abdestilliert. Der Rückstand stellt ein zähflüssiges, dunkles Öl dar.

Viskosität (50 °C) : 8,05 Pa.s
Basenzahl : 42 mg KOH/g
Stickstoffgehalt : 2,1 %

Beispiele 5-12

Als Ausgangsstoffe dienen Diels-Alder-Produkte aus Dienen und Maleinsäureanhydrid — sowohl technische als auch solche, die nach bekannten Verfahren hergestellt worden sind — sowie deren nach bekannten Verfahren hergestellten Hydrierungsprodukte.

Beispiele 5-9

6 Mol Diels-Alder-Produkt bzw. dessen Hydrierungsprodukt werden mit 6 Mol Triacetondiamin in 4 l Xylol im 12 l-Stahlautoklaven bei 200 °C in 3 h umgesetzt. Nach dem Abdestillieren des Reaktionswassers und des Lösungsmittels wird das gebildete cyclische Imid im Hochvakuum destilliert.

Beispiel 5

N-(2,2,6,6-Tetramethyl-4-piperidyl)-hexahydrophthalimid

Siedepunkt : 146 °C bei $10^{-4}$ bar
Schmelzpunkt : 103-104 °C
Basenzahl : 192 mg KOH/g

Elementaranalyse

| | | | | |
|---|---|---|---|---|
| berechnet : | C 69,9 % | H 9,6 % | N 9,6 % | O 11,0 % |
| gefunden : | C 70,0 % | H 9,7 % | N 9,6 % | O 10,6 % |

Beispiel 6

N-(2,2,6,6-Tetramethyl-4-piperidyl)-4-methyl-tetrahydrophthalimid

Siedepunkt : 148 °C bei $10^{-4}$ bar
Schmelzpunkt : 78-80 °C
Basenzahl : 183 mg KOH/g

Elementaranalyse

| | | | | |
|---|---|---|---|---|
| berechnet : | C 71,7 % | H 9,2 % | N 9,2 % | O 10,5 % |
| gefunden : | C 70,8 % | H 9,3 % | N 8,9 % | O 10,1 % |

Beispiel 7

N-(2,2,6,6-Tetramethyl-4-piperidyl)-4-methyl-hexahydrophthalimid

Siedepunkt: 153 °C bei $3 \cdot 10^{-4}$ bar
Stockpunkt: 35 °C
Basenzahl: 184 mg KOH/g

Elementaranalyse

berechnet: C 70,6 % H 9,8 % N 9,2 % O 10,5 %
gefunden: C 70,8 % H 9,9 % N 9,1 % O 10,8 %

Beispiel 8

N-(2,2,6,6-Tetramethyl-4-piperidyl)-4,6,6-trimethyl-bicyclo [2,2,2]-oct-7-en-2,3-dicarbonsäureimid

Siedepunkt: 182 °C bei $6 \cdot 10^{-4}$ bar
Schmelzpunkt: 55-60 °C
Basenzahl: 156 mg KOH/g

Elementaranalyse

berechnet: C 73,7 % H 9,5 % N 7,8 % O 8,9 %
gefunden: C 73,6 % H 9,6 % N 7,4 % O 9,2 %

Beispiel 9

N-(2,2,6,6-Tetramethyl-4-piperidyl)-4,6,6-trimethyl-bicyclo [2,2,2]-octan-2,3-dicarbonsäureimid

Siedepunkt: 180 °C bei $3 \cdot 10^{-4}$ bar
Schmelzpunkt: 50-58 °C
Basenzahl: 157 mg KOH/g

Elementaranalyse

berechnet: C 73,3 % H 10,0 % N 7,8 % O 8,9 %
gefunden: C 73,0 % H 10,0 % N 7,6 % O 9,1 %

Beispiel 10

N-(2,2,6,6-Tetramethyl-4-piperidyl)-bicyclo [2,2,1]-hept-5-en-2,3-dicarbonsäureimid

Bicyclo [2,2,1]-hept-5-en-2,3-dicarbonsäureanhydrid wird analog Beispiel 5-9 umgesetzt. Die Aufarbeitung erfolgt jedoch nicht durch Destillation im Hochvakuum, sondern durch Umkristallisation aus Xylol.

Schmelzpunkt: 157-158 °C
Basenzahl: 184 mg KOH/g

Elementaranalyse

berechnet: C 71,5 % H 8,6 % N 9,3 % O 10,6 %
gefunden: C 71,6 % H 8,7 % N 9,1 % O 10,6 %

Beispiele 11 und 12

In die Schmelze des Diels-Alder-Produktes bzw. dessen Hydrierungsproduktes wird bei ca. 150 °C im Molverhältnis 1 : 1 Triacetondiamin langsam hinzugefügt. Es wird noch 1 h nachgerührt. Dabei destilliert ein Teil des Reaktionswassers ab. Anschließend wird kurzzeitig auf 200-230 °C erhitzt. Nach vollständiger Destillation des Reaktionswassers wird im Hochvakuum das gebildete cyclische Imid feindestilliert.

Beispiel 11

N-(2,2,6,6-Tetramethyl-4-piperidyl)-Δ4-tetrahydrophthalimid

Siedepunkt: 158 °C bei $3 \cdot 10^{-4}$ bar
Schmelzpunkt: 98 °C
Basenzahl: 193 mg KOH/g

Elementaranalyse

berechnet: C 70,3 % H 9,0 % N 9,5 % O 11,0 %
gefunden: C 70,5 % H 9,1 % N 9,5 % O 10,9 %

Beispiel 12

N-(2,2,6,6-Tetramethyl-4-piperidyl)-3-methylhexahydrophthalimid

Siedepunkt: 148 °C bei $3 \cdot 10^{-4}$ bar
Stockpunkt: 33 °C
Basenzahl: 184 mg KOH/g

Elementaranalyse

berechnet: C 70,6 % H 9,8 % N 9,2 % O 10,5 %
gefunden: C 70,9 % H 10,0 % N 8,9 % O 11,0 %

Anwendung

Beispiel 13

Die in Beispiel 1, 2, 3 und 10 beschriebenen cyclischen Imide werden auf ihre Wirksamkeit als Stabilisator in Polypropylen geprüft. Zu diesem Zwecke werden sie in einer Konzentration von 0,4 % bezogen auf Polymeres in die Schmelze eines Polypropylens (Vestolen P 5202®, Handelsprodukt der Firma Chemische Werke Hüls AG) eingearbeitet.

Als Vergleichssubstanzen dienen der bekannte Stabilisator auf Tetramethylpiperidin-Basis — Tinuvin 770® (Handelsprodukt der Firma Ciba-Geigy AG) —, sowie zwei Handelsprodukte der Firma Chimosa, ebenfalls auf Tetramethylpiperidin-Basis. Die Vergleichssubstanzen werden nur in einer Konzentration von 0,2 %, bezogen auf Polymeres eingesetzt, da sie aufgrund ihrer chemischen Zusammensetzung die UV-stabilisierend wirksame Komponente — den Tetramethylpiperidyl-Rest — im Vergleich zu den Testsubstanzen in annähernd doppelter Konzentration enthalten.

Die Prüfung erfolgt in Form eines Xenotests 1200. Die Versuchsergebnisse sind in der folgenden Tabelle zusammengestellt.

Xenotest 1200

| Testsubstanz | [Gew.%] | Testdauer [h] | Versprödung [h] | Risse auf der Oberfläche [h] | Opazität [h] |
|---|---|---|---|---|---|
| Tinuvin 770® | 0,2 | >7 500 | keine | 5 020 | 2 250 |
| Chimassorb CR 141® | 0,2 | 3 500 | 3 500 | 2 300 | 1 200 |
| Chimassorb CR 144® | 0,2 | 3 200 | 3 200 | 2 300 | 1 300 |
| Imid Beisp. 1 | 0,4 | >7 500 | keine | 5 020 | 3 750 |
| Imid Beisp. 2 | 0,4 | 7 400 | 7 400 | 3 100 | 2 950 |
| Imid Beisp. 3 | 0,4 | 6 300 | 6 300 | 4 050 | 3 750 |
| Imid Beisp. 10 | 0,4 | >6 700 | keine | 2 950 | 2 500 |

Beispiel 14

Die erfindungsgemäßen cyclischen Imide werden in Kombination mit Tinuvin 327®, einem bekannten Stabilisator auf Benztriazolbasis (Handelsprodukt der Firma Ciba Geigy AG) wie in Anwendungsbeispiel 13 in Polypropylen eingearbeitet und getestet. Als Vergleichssubstanzen dienen wie in Anwendungsbeispiel 13 Tinuvin 770® und die beiden Markprodukte der Firma Chimosa. Die Konzentrationen betragen jeweils 0,2 % Testsubstanz bzw. 0,1 % Vergleichssubstanz kombiniert mit 0,1 % Tinuvin 327®. Dabei beziehen sich alle Konzentrationsangaben auf die eingesetzte Menge an Polymerem.

Die Prüfung erfolgt in Form eines Xenotests 1200. Die Versuchsergebnisse sind in der folgenden Tabelle zusammengestellt.

Xenotest 1200

| Testsubstanz + Tinuvin 327® 0,1 [Gew.%] | | Testdauer [h] | Versprödung [h] | Risse auf der Oberfläche [h] | Opazität [h] |
|---|---|---|---|---|---|
| Tinuvin 770® | 0,1 | >7500 | keine | 4050 | 2100 |
| Chimassorb CR'141® | 0,1 | >6700 | keine | 3250 | 1300 |
| Chimassorb CR 144® | 0,1 | >6700 | keine | 3250 | 1300 |
| Imid Beisp. 1 | 0,2 | >7500 | keine | 3750 | 3750 |
| Imid Beisp. 2 | 0,2 | >7500 | keine | 4050 | 3750 |
| Imid Beisp. 3 | 0,2 | 7500 | 7500 | 4050 | 2100 |
| Imid Beisp. 10 | 0,2 | >6700 | keine | 6250 | 3100 |

**Ansprüche**

1. Cyclische Imide der allgemeinen Formel

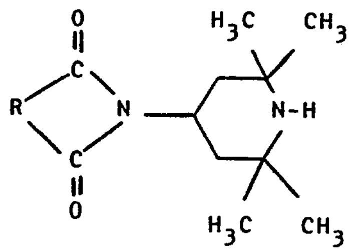

(I)

in der R ein gesättigter oder ungesättigter, gegebenenfalls Alkyl — oder Alkenyl-substituierter Alkylen — oder Cycloalkylenrest mit 2-120 C-Atomen ist, mit der Maßgabe, daß von dieser Definition keine aromatischen Reste erfaßt werden.

2. Verfahren zur Herstellung der Verbindungen gemäß Anspruch 1, dadurch gekennzeichnet, daß man 4-Amino-2,2,6,6-tetramethylpiperidin mit den cyclischen Anhydriden bzw. deren Säureform der allgemeinen Formel

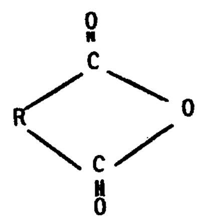

in der R die in Formel I vorgenannte Bedeutung besitzt, bei Temperaturen von 110-250 °C umsetzt.

3. Verwendung der Verbindungen gemäß Anspruch 1, zur Stabilisierung von Polyolefinen gegen Photo- und/oder Thermozersetzung.

4. Verwendung der Verbindungen gemäß den Ansprüchen 1 und 3, dadurch gekennzeichnet, daß man die Verbindungen in einer Menge von 0,01-5 Gew.% bezogen auf die Menge Polyolefin, einsetzt.

**Claims**

1. Cyclic imides of the general formula

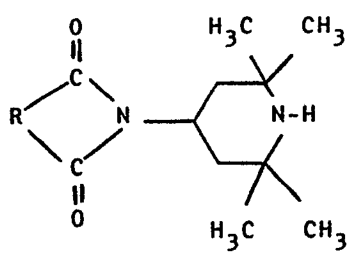

(I)

in which R is a saturated or unsaturated, optionally alkyl- or alkenyl-substituted, alkylene or cycloalkylene radical having 2-120 C atoms, with the proviso that this definition does not cover any aromatic radicals.

2. Process for the preparation of the compounds according to Claim 1, characterised in that 4-amino-2,2,6,6-tetramethylpiperidine is reacted with cyclic anhydrides, or the acid form thereof, of the general formula

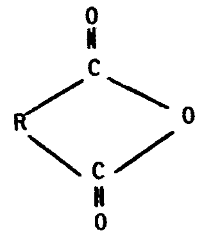

in which R is as defined under formula I, at temperatures of 110-250 °C.

3. Use of the compounds according to Claim 1 for the stabilisation of polyolefines against photodecomposition and/or thermal decomposition.

4. Use of the compounds according to Claims 1 and 3, characterised in that the compounds are employed in a quantity of 0.01-5 % by weight, relative to the quantity of polyolefine.

**Revendications**

1. Imides cycliques de formule générale

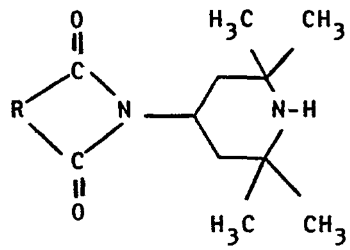

(I)

où R représente un reste alcoylène ou cycloalcoylène comportant 2 à 120 atomes de C, saturé ou insaturé, éventuellement alcoyl- ou alcényl-substitué, avec la condition que cette définition ne comprenne aucun reste aromatique.

2. Procédé d'obtention des composés selon la revendication 1, caractérisé en ce que l'on fait réagir la 4-amino-2,2,6,6-tétraméthylpipéridine avec les anhydrides cycliques ou leur forme acide, de formule générale

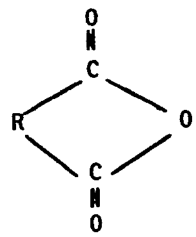

où R a la signification donnée pour la formule I, à une température comprise entre 110 et 250 °C.

3. Utilisation des composés selon la revendication 1, pour la stabilisation de polyoléfines contre la photodécomposition et/ou la décomposition thermique.

4. Utilisation des composés selon les revendications 1 et 3, caractérisée en ce que l'on met en œuvre les composés dans une proportion de 0,01 à 5 % en poids, rapporté à la quantité de polyoléfine.